# EUROPEAN PATENT SPECIFICATION

(11) **EP 1 863 670 B1**
(45) Date of publication and mention of the grant of the patent: **02.04.2014**
(21) Application number: 06734134.7
(22) Date of filing: 01.02.2006
(51) Int. Cl.: B60N 2/02, B60N 2/06

(54) **VEHICLE SEAT TRACK SYSTEM**
FAHRZEUGSITZSCHIENENSYSTEM
SYSTÈME DE GLISSIÈRE DE SIÈGE DE VÉHICULE

(30) Priority: 02.02.2005 US 649397 P
(43) Date of publication of application: 12.12.2007
(73) Proprietor: Johnson Controls Technology Company, Holland, MI 49423 (US)
(72) Inventor: BREWER, William, S., Pinckney, MI 48169 (US); BOZINTAN, Vasile, E., Farmington Hills, Michigan 48331 (US); RAMASESHADRI, Ganesh, T., Ypsilanti, Michigan 48197 (US); KAZYAK, David, Brighton, Michigan 48114 (US)
(74) Representative: Wolff, Felix
(86) International application number: PCT/US2006/003468
(87) International publication number: WO 2006/083910

(56) References cited:
- EP-A- 1 442 923
- DE-A1- 3 138 712
- US-A- 6 113 051
- US-A1- 2004 206 878
- US-B1- 6 389 917

## Description

### CROSS-REFERENCE TO RELATED PATENT APPLICATIONS

### BACKGROUND

The present invention relates generally to the field of adjustable vehicle seat assemblies. More particularly, the present invention relates to the field of powered track systems for use with adjustable vehicle seat assemblies.

Vehicle seat assemblies typically include a seat and a track system that enables the position of the seat within the vehicle to be adjusted in at least the forward and reward direction. The ability to adjust the position of the seat is desirable to enable vehicle operators of various sizes to be seated comfortably and safely within the motor vehicle. Such track systems typically include at least two track assemblies or arrangements that are located on each side of the seat. Each track arrangement generally includes two or more tracks that move relative to one another and a device or assembly that controls the ability of the tracks to move relative to one another. Some track systems make use of manual devices or latching mechanisms that releasably retain the individual tracks of each track arrangement in a locked position relative to one another until the latch mechanism is released by the occupant of the seat. Once the latch mechanism is released, the tracks can be moved relative to one another, which allows the occupant to adjust the position of the seat and to then reengage or release the latching mechanism to hold the seat in the new location. Other track systems utilize a motor in conjunction with a system of gears and other components to control the relative positions of the individual tracks of each track arrangement. To move a seat coupled to such a track system to a new position, the occupant simply activates the motor, which through a series of additional components, causes the individual tracks to move relative to one another.

Many of the powered track systems utilize a single motor to provide the power to move the individual tracks of the track arrangements relative to one another. Often, the motor is located below the seat cushion portion of the seat between the two track arrangements and is oriented so that the motor is generally perpendicular to the two track arrangements. Consequently, at least a portion of the motor is generally located directly below the portions of the seat cushion that tend to deflect the most when an occupant of the vehicle sits on the seat cushion. As a result, in some seat configurations, particularly those where vertical space is limited, the bottom of the seat cushion may contact at least a portion of the motor when the occupant bounces up and down on the seat. Often times, the occupant of the seat will be able to feel this contact and may experience some discomfort. The contact between the motor and the bottom of the seat cushion also may result in damage to the motor, to the seat cushion, and/or to other parts of the seat assembly. Those track systems that utilize components that extend above the height of the track arrangements in order to operably couple the motor to the track arrangements are particularly susceptible to such contact.

A track system according to the preamble of claim 1 is disclosed in DE-A-3138712.

In many powered track systems, the motor is coupled to a portion of each track arrangement (e.g., to a direct drive transmission or gear box) that converts the rotational movement provided by the motor into the linear movement that causes the seat to move forward or rearward. This manner of coupling is often done in such a way that the rotational speed of the input received by the motion conversion portion of the track arrangement is the same as the rotational speed of the output shaft of the motor. When the motor is coupled to the movement conversion portion of each track arrangement in this way, adapting the vehicle seat assembly to different applications may be relatively difficult, as the ability to adjust the speed of the rotation that is input into the motion conversion portion of each track arrangement is limited.

To provide a reliable, durable, effective, and versatile track system that avoids one or more of the above-referenced and other problems would represent a significant advance in the art.

### SUMMARY

This is solved by claim 1.

### BRIEF DESCRIPTION OF THE DRAWINGS

FIGURE 1 is a perspective view of a seat assembly according to one exemplary embodiment.
FIGURE 2 is a perspective view of the track system of the seat assembly of FIGURE 1.
FIGURE 3 is a simplified, cross-sectional view of a track arrangement according to one exemplary embodiment.
FIGURE 4 is a perspective view of lower tracks of a pair of track arrangements according another exemplary embodiment.
FIGURE 5 is a perspective view of upper tracks of a pair of track arrangements according another exemplary embodiment.
FIGURE 6 is a perspective view of the track arrangements of the track system of FIGURE 2.
FIGURE 7 is a cross-sectional view of a track arrangement of FIGURE 6 taken along line 7-7.
FIGURE 8 is an end view of a track arrangement of FIGURE 6.

### DETAILED DESCRIPTION OF THE EXEMPLARY AND ALTERNATIVE EMBODIMENTS

Before providing the description of the exemplary and alternative embodiments of the track systems, it should be noted that references to "outer," "inner," "intermediate," "above," "below," "upper," "lower," "left," or "right" in this description are merely used to identify the various elements as they are oriented in the figures or as they may be oriented in one or more particular embodiments of the track system. These terms are not meant to limit the element which they describe, as the various elements may be oriented or arranged differently in various track systems.

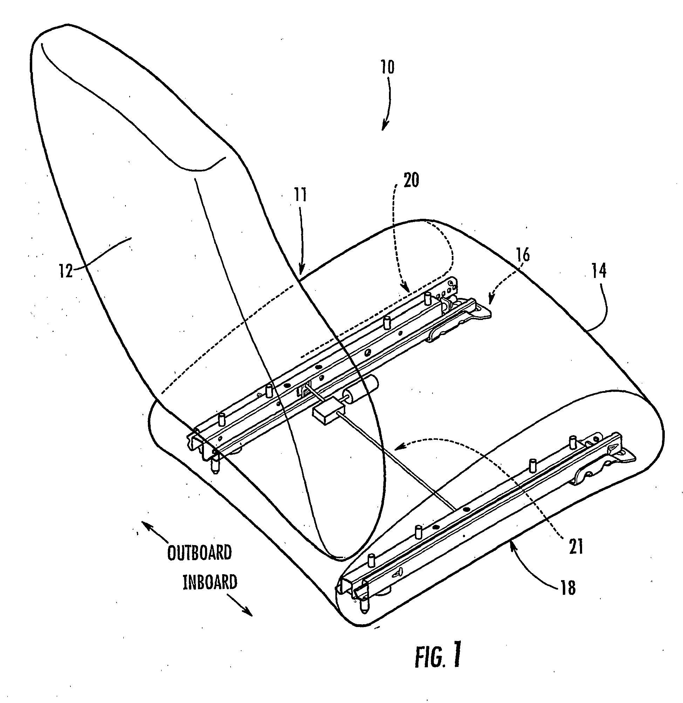

Referring generally to the figures and in particular to FIGURE 1, a seat assembly 10 is shown according to one exemplary embodiment. Seat assembly 10 includes a seat 11 and a track system 16. Seat 11 generally includes a back portion 12 and a seat cushion portion 14, each of which may take any one of a variety of well known or novel configurations. Track system 16 is generally configured to support seat 11 and to enable an occupant of seat 11 to adjust the position of seat 11 in the forward and rearward direction.

Referring still to FIGURE 1, track system 16 includes an inboard track arrangement 18, an outboard track arrangement 20, and a power transmission system 21. Inboard track arrangement 18 and outboard track arrangement 20 are coupled to seat cushion portion 14 of seat 11 in a generally spaced-apart and parallel relationship, with inboard track arrangement 18 being located proximate the inboard side of seat cushion portion 14 and outboard track arrangement 20 being located proximate the outboard side of seat cushion portion 14. Power transmission system 21 is generally located between inboard track arrangement 18 and outboard track arrangement 20 in a position that allows it to engage a portion of inboard track arrangement 18 and outboard track arrangement 20 and that allows it to minimize or reduce any interference with seat 11. Track arrangements 18 and 20 and power transmission system 21 are configured to cooperate together to allow for the movement or translation of seat 11 relative to the general structure to which seat 11 is coupled, such as the floor of a automobile, when the occupant of seat 11 activates power transmission system 21.

Track arrangement 20 is generally identical to track arrangement 18, except that track arrangement 20 is a mirror image of track arrangement 18. Accordingly, the same reference numbers will be used to refer to like components of track arrangement 20 and track arrangement 18. For simplicity, only track arrangement 18 will be described below, it being understood that the description applies equally to track arrangement 20. Track arrangement 18 includes a lower track 22, an upper track 24, friction reducing members 26, and a motion transfer apparatus 28.

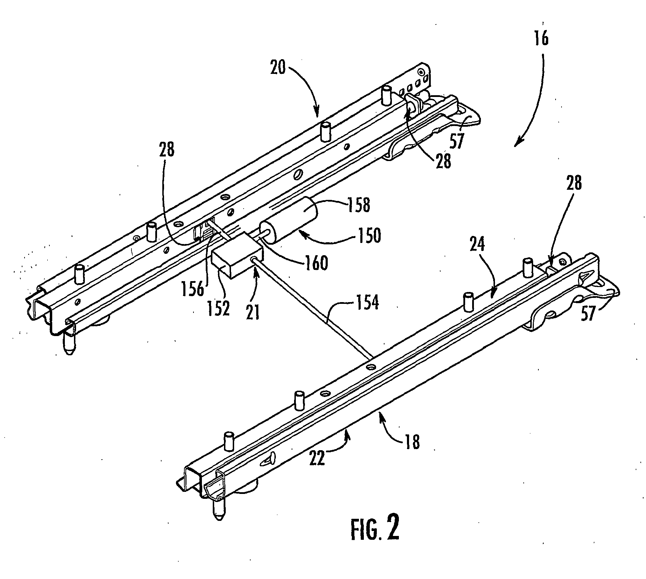

Referring now to FIGURES 2-4, lower track 22 (e.g., track, rail, slide, guide, etc.) is an elongated and generally rigid member that is configured to be coupled to a structure, such as the floorboard of an automobile, and to generally serve as a guide for upper track 24. According to one exemplary embodiment, lower track 22 is an asymmetrical track that includes an outer channel 30, an inner channel 32, and an intermediate channel 34. It should be noted that the terms "outer" and "inner" as used in connection with the upper and lower tracks are intended to refer to the relative position of the particular component or feature of the tracks relative to the center of the seat to which the tracks are coupled.

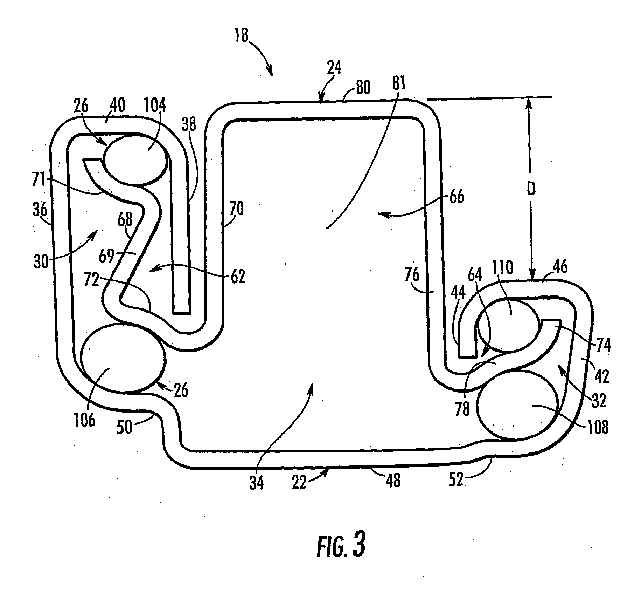

As best shown in FIGURE 3, outer channel 30 is a generally U-shaped channel that faces downwardly. Outer channel 30 is formed by two generally vertical sidewalls 36 and 38 (the two legs of the "U") that are joined together by a generally horizontal intermediate wall 40 (the base of the "U"). The location of intermediate wall 40 above the base of lower track 22 defines the height of channel 30.

Similarly, inner channel 32 is a generally U-shaped channel that faces downwardly. Inner channel 32 is formed by two generally vertical sidewalls 42 and 44 (the two legs of the "U") that are joined together by a generally horizontal intermediate wall 46 (the base of the "U"). The location of intermediate wall 46 above the base of lower track 22 defines the height of channel 32, which is roughly half the height of channel 30.

Intermediate channel 34 is a generally upwardly facing, U-shaped channel (with one leg being longer than the other) that is formed by sidewall 38 of channel 30 (the longer leg of the "U"), sidewall 44 of channel 32 (the shorter leg of the "U"), and a generally horizontal intermediate wall or base 48 (the base of the "U") that extends between, and couples to, sidewall 36 of channel 30 and sidewall 42 of channel 32. According to one exemplary embodiment, the area in which base 48 transitions into sidewall 36 includes a step 50 that generally serves to raise the intersection between base 48 and sidewall 36 in order to provide a suitable support surface for a friction reducing member (discussed below). A similar, although smaller and more gradual, step 52 is also provided in the area in which base 48 transitions into sidewall 42. Like step 50, step 52 generally serves to raise the intersection between base 48 and sidewall 42 in order to provide a suitable support surface for a friction reducing member (discussed below).

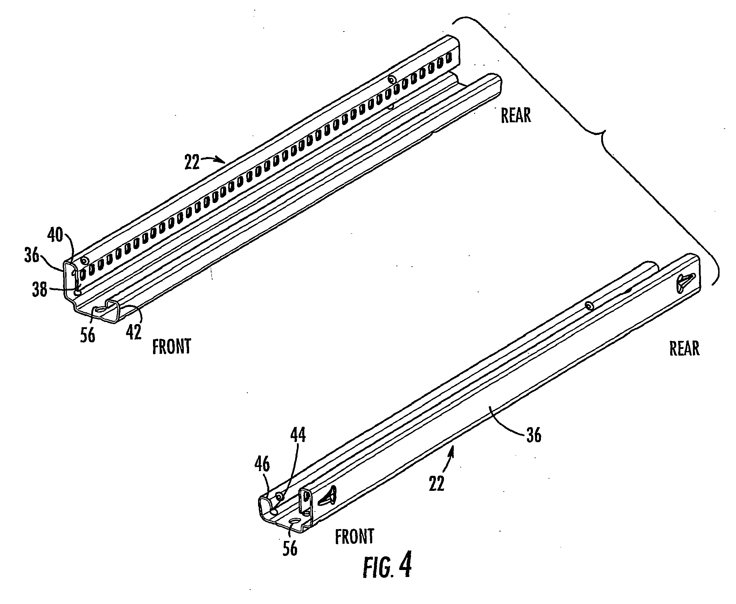

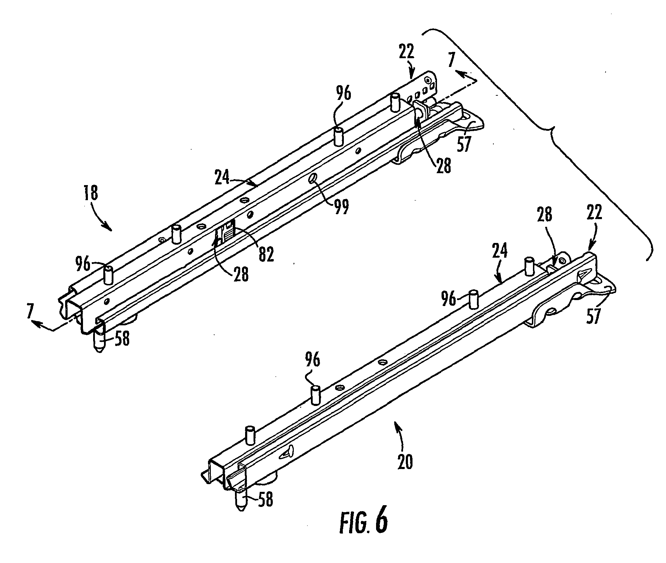

As best shown in FIGURES 4, 6, 7, and 8, intermediate wall or base 48 of lower track 22 includes apertures 56, which are configured to receive one of a variety of different coupling members, fasteners, or structures (e.g., pins, studs, rivets, dowels, bolts, etc.) that may be used to couple lower track 22 to the floor of an automobile (or one of a variety of other structures). One example of such a coupling member is pin or stud 58 (see FIGURES 6-8) which extends through aperture 56 and which is configured to couple to the floor of an automobile. To assist in the coupling of lower track 22 to the vehicle floor, a foot 57, which is configured to be coupled to the vehicle floor, is coupled to the front of lower track 22.

According to various alternative and exemplary embodiments, the apertures in the base of the lower track may vary in number, size, shape, and configuration in order to allow the lower track to be coupled to one or more of a variety of different structures using one or more of a variety of different devices or structures. According to other various alternative and exemplary embodiments, the lower track may include other structures or devices (such as projections, recesses, extensions, fingers, tabs, etc.) that facilitate the coupling of the lower track to different structures.

Referring now to FIGURES 3, 5, and 6, upper track 24 (e.g., track, rail, slide, guide, etc.) is an elongated and generally rigid member that is configured to be coupled to lower track 22 in a manner that allows upper track 24 to move (e.g., translate or slide) relative to lower track 22. According to one exemplary embodiment, upper track 24 is an asymmetrical track that includes an outer channel 62, an inner channel 64, and an intermediate channel 66.

Outer channel 62 is a roughly U-shaped channel that faces upwardly. Outer channel 62 is formed by a generally bent sidewall 68 and a generally vertical sidewall 70 (the two legs of the "U") that are joined together by an intermediate wall 72 (the base of the "U") that inclines upwardly as it extends from sidewall 70 to sidewall 68. The generally bent sidewall 68 includes a lower portion 69 that extends upwardly and inwardly (toward sidewall 70) and an upper portion 71 that extends upwardly and outwardly (away from sidewall 70).

Inner channel 64 is a roughly U-shaped, relatively shallow channel (with one leg of the "U" being much longer than the other) that faces upwardly. Inner channel 64 is formed by two generally vertical sidewalls 74 and 76 (the two legs of the "U") that are joined together by an intermediate wall 78 (the base of the "U") that inclines upwardly as it extends from sidewall 76 to sidewall 74. Sidewall 74 is much shorter than sidewall 76 and extends to a height that is much less than the height to which sidewall 76 extends.

Intermediate channel 66 is a generally downwardly facing, U-shaped channel (with one leg being longer than the other) that is formed by sidewall 70 of channel 62 (the shorter leg of the "U"), sidewall 76 of channel 64 (the longer leg of the "U"), and a generally horizontal intermediate wall or top 80 (the base of the "U") that extends between, and couples to, sidewall 70 of channel 62 and sidewall 76 of channel 64.

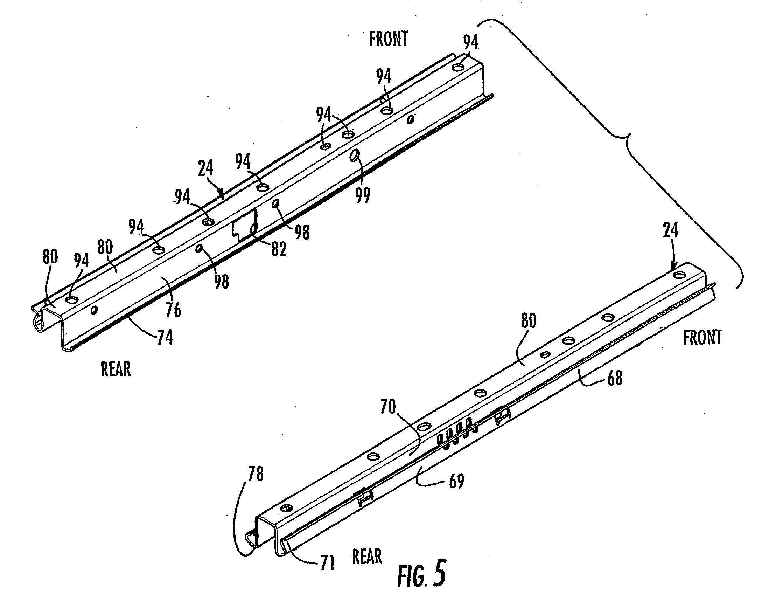

According to one exemplary embodiment illustrated in FIGURE 5, upper track 24 includes a generally "L-shaped" aperture 82 (e.g., window, opening, hole, etc.) in sidewall 76. Aperture 82 is generally configured to allow a portion of power transmission system 21 to extend through upper track 24 and couple to motion transfer apparatus 28. According to various alternative and exemplary embodiments, the size, shape, location, and configuration of aperture 82 may vary. For example, the aperture may be smaller or larger, it may have a different shape, it may include multiple apertures, and/or it may be placed in various locations along the upper track.

As shown in FIGURES 2 and 5-8, intermediate wall or top 80 of upper track 24 includes apertures 94. Apertures 94 are configured to receive one of a variety of different coupling members, fasteners, or structures (e.g., pins, studs, rivets, dowels, bolts, etc.) that may be used to couple upper track 24 to a portion of seat 11, or that may be used to couple a variety of other structures (e.g., brackets, braces, supports, straps, etc.) to upper track 24, such as a bracket or brace that supports and/or retains a portion of power transmission system 21. One example of such a coupling member is pin or stud 96 (see FIGURES 6-8) which extends through aperture 94 and which is configured to couple to the frame or other portion of seat 11.

According to various alternative and exemplary embodiments, the apertures in the top of the upper track may vary in number, size, shape, and configuration in order to allow the upper track to be coupled to one or more of a variety of different seat configurations or other structures. According to other various alternative and exemplary embodiments, the upper track may include other structures or devices (such as projections, recess, extensions, fingers, tabs, etc.) that facilitate the coupling of the upper track to the seat or to other structures.

Referring now to FIGURES 5 and 6, sidewall 76 of upper track 24 includes apertures 98 and 99, which may be configured to receive one or more of a variety of different coupling members, fasteners, or structures (e.g., pins, studs, rivets, dowels, bolts, portions of other components of seat assembly 10, etc.) that may be used to couple a portion of seat 11 to upper track 24, or that may be used to couple a variety of other structures (e.g., brackets, braces, supports, straps, etc.) to upper track 24, such as a bracket or brace that supports and/or retains a portion of power transmission system 21. According to various alternative and exemplary embodiments, the different apertures in the sidewall of the upper track may vary in number, size, shape, and configuration in order to allow or facilitate the coupling of one or more of a variety of different components or structures to the upper track.

As best shown in FIGURE 2, lower track 22 and upper track 24 are coupled together in a manner that allows upper track 24 to translate (e.g., move linearly) relative to lower track 22. In this coupled condition, sidewall 68 of upper track 24 extends upwardly into channel 30 of lower track 22, and sidewall 74 of upper track 24 extends generally upwardly into channel 32 of lower track 22. At the same time, sidewall 38 of lower track 22 extends into channel 62 of upper track 24, and sidewall 44 of lower track 22 extends into channel 64 of upper track 24. In other words, outer channel 30 of lower track 22 interlocks or engages outer channel 62 of upper track 24, and inner channel 32 of lower track 22 interlocks or engages inner channel 64 of upper track 24. Intermediate channel 34 of lower track 22 is generally aligned with intermediate channel 66 of upper track 24 to define an internal volume or chamber 81 between upper track 24 and lower track 22. Friction reducing members 26 (described below) are provided between various portions of upper track 24 and lower track 22 to maintain the alignment of upper track 24 and lower track 22 and to facilitate the translational movement of upper track 24 relative to lower track 22.

In the coupled condition illustrated in FIGURE 2, intermediate channel 66 of upper track 24 is bordered on its left by outer channel 30 of lower track 22 and on its right by inner channel 32 of lower track 22. The height of outer channel 30 of lower track 22 (e.g., the distance that intermediate wall 40 lies above base 48) is approximately equal to the height of intermediate channel 66 of upper track 24 (e.g. the distance that top 80 of upper track 24 lies above base 48 of lower track 22). The height of inner channel 32 of lower track 22 (e.g., the distance that intermediate wall 46 lies above base 48), on the other hand, is less than the height of intermediate channel 66 of upper track 24. According to various exemplary and alternative embodiments, the height of inner channel 32 of lower track 22 is roughly half of, or a third of, the height of intermediate channel 66 of upper track 24. Accordingly, a portion of sidewall 76 of intermediate channel 66 extends above the top of channel 32 (e.g., extends above intermediate wall 46) by a distance D. The portion of sidewall 76 that extends above the top of channel 32 by a distance D provides an area or surface through which a portion of motion transfer apparatus 28 may be coupled to a portion of power transmission system 21 and allows power transmission system 21 to extend substantially horizontally from upper track 24.

According to other various alternative and exemplary embodiments, the size, shape, and configurations of the upper track and the lower track may vary depending on one or more of a plurality of different factors, including the application in which the tracks will be used, the environment in which the tracks will be used, the size of the bearings used between the upper track and the lower track, the configuration or characteristics of the power transmission system with which the tracks will be used, cost considerations, manufacturing considerations; etc. For example, according to various alternative and exemplary embodiments, the height of the outer channel of the lower track may be higher or lower than the height of the intermediate channel of the upper track, and/or the height of the inner channel of the lower track may be greater than or less than roughly half the height of the intermediate channel of the upper track.

According to one exemplary embodiment, each of upper track 24 and lower track 22 are integrally formed as a single unitary body from a single piece of ultra high strength steel that is preferably roll-formed and may be stamped. According to various alternative and exemplary embodiments, each of the upper track and/or the lower track may be constructed from two or more separate pieces of material that are coupled together, such as through the use of welding, fasteners, or other techniques or methods. According to still other alternative and exemplary embodiments, each of the upper track and lower track may be constructed from one or more of a variety of different materials including various metals, polymers, composites, etc.

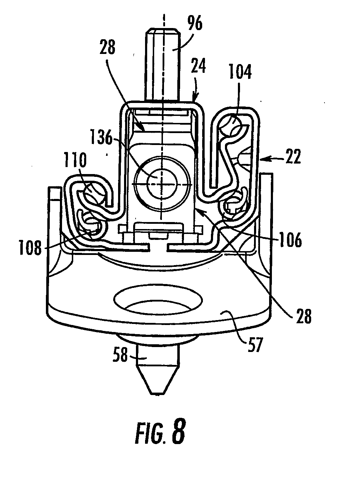

Referring now to FIGURES 3 and 8, friction reducing members 26 (e.g., balls, rollers, bushings, bearings, rolling elements, etc.) shown as ball bearings 104, 106, 108, and 110, are intended to provide and maintain the alignment between lower track 22 and upper track 24 and/or to reduce the friction between lower track 22 and upper track 24 during the movement of upper track 24. According to one exemplary embodiment, bearings 104,106, 108, and 110 each represent a plurality of similarly located bearings that are disposed along the length of track arrangement 18 generally between lower track 22 and upper track 24. Bearing 104 (and the plurality of other similar bearings bearing 104 represents) is generally positioned between upper portion 71 of sidewall 68 of upper track 24 and the intersection between intermediate wall 40 and sidewall 38 of lower track 22. Bearing 106 (and the plurality of other similar bearings bearing 106 represents) is generally positioned between intermediate wall 72 of upper track 24 and the intersection between sidewall 36 and base 48 of lower track 22. Bearing 108 (and the plurality of other similar bearings bearing 108 represents) is generally positioned between intermediate wall 78 of upper track 24 and the intersection between base 48 and sidewall 42 of lower track 22. Bearing 110 (and the plurality of other similar bearings bearing 110 represents) is generally positioned between the intersection of intermediate wall 78 and sidewall 74 of upper track 24 and the intersection between intermediate wall 46 and sidewall 44 of lower track 22.

According to various alternative and exemplary embodiments, the size of each of the bearings may vary depending on the precise configuration and spacing of the upper and lower tracks. According to other various alternative and exemplary embodiments, the number and location of the friction members or bearings may vary. For example, the track arrangement may be configured to include bearings at one, two, three, five, or more than five locations around the cross-section of the track arrangement rather than at four locations. According to still other various alternative and exemplary embodiments, the friction reducing members may be one of a variety of different friction reducing members, including roller bearings, needle bearings, oval-shaped bearings, bushings, etc. According to still other various alternative and exemplary embodiments, one or more different types of friction reducing members may be used together in the track arrangement. According to still other alternative and exemplary embodiments, the bearings may be fixed to, or captured within, one track or may be free to slide or move within the respective channel along the length of the tracks (until they hit stops provided in the tracks to stop the bearings from escaping through the ends of the tracks). According to still other alternative and exemplary embodiments, one or more sets of the bearings may be provided in a body, guide, carriage, or cage that fixes the location of each bearing in the set relative to the other bearings in the set but still allows each bearing to freely roll.

A more detailed description of the track arrangements described above, as well as other suitable track arrangements, is provided in U.S. Provisional Patent Application No. 60/627,429, entitled "Vehicle Seat Track" and filed November 12, 2004.

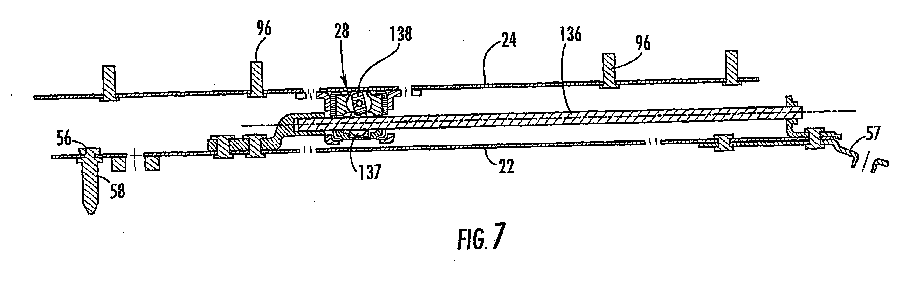

As shown schematically in FIGURES 7-8, motion transfer apparatus 28 (e.g., gear drive, gear system, gear arrangement, drive assembly, etc.) is an assembly of components that cooperate with power transmission system 21 to control the movement of upper track 24 relative to lower track 22. Motion transfer apparatus 28 is generally located within chamber 81 formed between lower track 22 and upper track 24 and is coupled between lower track 22 and upper track 24. Motion transfer apparatus 28 is configured to transfer or convert the rotary motion provided by power transmission system 21 into the translational motion of upper track 24 relative to lower track 22. According to one exemplary embodiment, motion transfer apparatus 28 includes a power screw 136, a helical gear 137, and a worm gear 138.

Power screw 136 (e.g., screw, drive screw, threaded shaft or rod, worm, worm gear, etc.) is an elongated, threaded member that is coupled to base 48 of lower track 22 and that extends along a portion of the length of lower track 22. Power screw 136 has a length that is at least as great as the total distance over which seat 11 may be adjusted. According to various alternative and exemplary embodiments, the power screw may take one of a variety of different shapes, sizes, and configurations depending on the particular application in which it is used. For example, the cross-sectional shape of the threads of the power screw may be square, trapezoidal, rounded, triangular, or one of a variety of other shapes. Moreover, the pitch and other characteristics of the power screw may be adjusted to suit the particular application.

Helical gear 137 is a substantially ring-shaped gear having an outside diameter and an inside diameter that is formed by an aperture in the center of helical gear 137. The inside diameter of helical gear 137 is configured to receive power screw 136 and includes a series of teeth or threads that are configured to engage the teeth or threads on power screw 136. The teeth or threads on the inside diameter of helical gear 137 and on power screw 136 are configured such that when helical gear 137 is rotated around its axis (by worm 138), it translates (e.g., moves linearly) along the length of power screw 136. Helical gear 137 also includes a series of teeth around its outside diameter that are configured to engage worm 138.

Worm 138 is relatively short, threaded shaft that is coupled to power transmission system 21 and that engages helical gear 137. Worm 138 is arranged so that its axis of rotation is substantially perpendicular to the axis of rotation of helical gear 137. The end of worm 138 that engages helical gear 137 includes threads that are configured to engage the teeth around the outside diameter of helical gear 137. The engagement of worm 138 and helical gear 137 allows the axis of the rotational movement provided by power transmission system 21 to worm 138 to be rotated 90 degrees. Thus, as power transmission system 21 rotates worm 138, worm 138 rotates around a first axis, which in turn causes helical gear 137 to rotate (generally at a different rotational speed than worm 138) around a second axis that is perpendicular to the first axis and that helical gear 137 shares with power screw 136. As helical gear 137 rotates around the second axis it shares with power screw 136, helical gear 137 translates along the length of power screw 136. Helical gear 137 and worm 138 are coupled together and located within a housing that is coupled to upper track 24. As a result, the movement of helical gear 137 along the length of power screw 136, which is coupled to lower track 22, causes upper track 24 to move relative to lower track 22. The direction that helical gear 137 travels along the length of power screw 136 (which is determined by the direction helical gear 137 rotates relative to power screw 136) determines whether upper track 24 moves forward or rearward relative to lower track 22.

According to various alternative and exemplary embodiments, the motion transfer apparatus may include one of a variety of different gearing arrangements that are effective to transfer the rotary motion provided by the power transmission system into the translational motion of the upper track relative to the lower track. For example, rather than acting upon a helical gear, which then acts upon the power screw, the worm may act directly upon the power screw. Alternatively, a series of spur or helical gears may be provided to spin a nut that acts upon the power screw. According to other various alternative and exemplary embodiments, one or more of a variety of other gearing arrangements or other types of arrangements may be provided to convert the rotary motion provided by the power transmission system into the linear or translational movement of the upper track relative to the lower track. According to still other various alternative and exemplary embodiments, the worm and helical gear may be coupled to the lower track and the power screw may be coupled to the upper track. According to other various alternative and exemplary embodiments, the motion transfer apparatus may be configured such that one or more gears or nuts rotate around a stationary power screw, the power screw rotates within one or more stationary gears or nuts, or both the power screw and the nut or other gears rotate relative to one another. According to other various alternative and exemplary embodiments, other motion transfer apparatuses or devices (e.g., hydraulic or pneumatic cylinders, linear motors, etc.) may be used to control, or assist with the control of, the movement of the upper track with respect to the lower track. According to still other various alternative and exemplary embodiments, the system of gears or devices utilized within the motion transfer apparatus may have different gearing ratios.

Referring now to FIGURE 2, power transmission system 21 (which is shown schematically) is a system of components and mechanisms that provide and deliver the power to actuate motion transfer apparatus 28 and thereby cause upper track 24 to move relative to lower track 22 to adjust the fore and aft position of seat 11 within the vehicle. According to one exemplary embodiment, power transmission system 21 includes a power source 150, a gear box 152, a cable 154, and a cable 156.

Power source 150 (e.g., motor, engine, etc.) is a source of rotational mechanical energy which is derived from a stored energy source, such as a fuel cell, a battery, electricity, fuel, etc. According to one exemplary embodiment, power source 150 is an electric motor 158 (shown schematically in FIGURE 2) that is powered by the battery and/or alternator of the vehicle in which seat assembly 10 is provided. Motor 158 includes an output shaft 160 that is configured to be coupled to gear box 152 to transfer the rotational mechanical energy generated by motor 158 to gear box 152. Motor 158 has a generally cylindrical shape and is rigidly coupled to upper track 24 of outboard track arrangement 20 in such a way that motor 158 is located generally adjacent track arrangement 20 and in such a way that the longitudinal axis of motor 158 is generally parallel to the longitudinal axis of upper track 24. Thus, motor 158 is located closer to track arrangement 20 than it is to track arrangement 18. Motor 158 is also coupled to upper track 24 in such a way that motor 158 is located closer to the front of seat 11, which helps to avoid placing motor 158 in a position that may interfere with space below the rear portion of seat 11 in which an occupant of a more rearward seat may place his or her feet. According various alternative and exemplary embodiments, the power source may be structurally coupled to upper track 24 and/or gear box 152, and such coupling may be facilitated by one or more of a variety of different structures or devices, such as brackets, braces, straps, housings, fasteners, etc. According to another alternative embodiment, motor 158 may be coupled to upper track 24 of inboard track arrangement 18, rather than outboard track arrangement 20, and may be located adjacent to track arrangement 18. For simplicity, the following discussion will describe a configuration in which power source 150 or motor 158 is coupled to outboard track arrangement 20, it being understood that power source 150 or motor 158 could alternatively be coupled to inboard track arrangement 18.

Gear box 152 (e.g., transmission, gear arrangement, gear system, differential, gear drive, etc.) is an assembly of gears that transmits the rotational motion from output shaft 160 of electric motor 158 to cables 154 and 156. Gear box 152 is located at the end of output shaft 160 and generally serves as the link between output shaft 160 (which has a longitudinal axis generally parallel to the longitudinal axis of upper track 24) and cables 154 and 156 (which share a longitudinal axis that is generally perpendicular to output shaft 160 of motor 158 and to the longitudinal axis of upper track 24). Because gear box 152 is coupled to the end of output shaft 160 of motor 158, which is proximate outboard track arrangement 20, gear box 152 is generally located proximate outboard track arrangement 20 as well. According to one exemplary embodiment, gear box 152 is configured so that cables 154 and 156 rotate in the same direction at the same rotational speed. Depending on the characteristics of the gears used in gear box 152, gear box 152 may cause cables 154 and 156 to rotate at speeds greater than, equal to, or less than the rotational speed of output shaft 160 of motor 158. Accordingly, the gears utilized in gear box 152 may be selected so that the rotational speeds of cables 154 and 156 are appropriate for any particular situation. For example, if in one application it is desirable for cables 154 and 156 to have a high rotational speed, gear box 152 may be configured to provide such high rotational speed. If in another application it is desirable for cables 154 and 156 to have a low rotational speed, then gear box 152 may be configured to provide such low rotational speed. According to various alternative and exemplary embodiments, the gear box may be configured so that cables 154 and 156 rotate in different directions and/or at different speeds. According to other various alternative and exemplary embodiments, the gear box may take one of a plurality of different configurations to suit a plurality of different applications. According to still other various alternative and exemplary embodiments, the gear box may be structurally coupled to the upper track and/or the power source and such coupling may be facilitated by one or more of a variety of different structures or devices, such as brackets, braces, straps, housings, fasteners, etc.

Cable 154 (e.g., shaft, wire, axle, rod, drive shaft, etc.) is an elongated member that is coupled to motion transfer apparatus 28 of track arrangement 18 (specifically, worm gear 138) on one end and gear box 152 on the other end. Cable 154 is configured to transfer the rotational motion imparted to it by gear box 152 to motion transfer apparatus 28 of track arrangement 18. Due to the proximity of gear box 152 to outboard track arrangement 20, cable 154 extends across most of the distance between outboard track arrangement 20 and inboard track arrangement 18. According to one exemplary embodiment, the cable is a rotary motion flexible shaft or cable having a core that rotates within an outer cover or sheath. The ends of cable 154 have square plugs that engage corresponding square openings in a portion of motion transfer apparatus 28 (e.g., in worm gear 138) of track arrangement 18 and in gear box 152.

Cable 156 (e.g., shaft, wire, axle, rod, drive shaft, etc.) is similar to cable 154 except that it is coupled to motion transfer apparatus 28 of track arrangement 20 (specifically, worm gear 138) on one end and gear box 152 on the other end. Cable 156 is configured to transfer the rotational motion imparted to it by gear box 152 to motion transfer apparatus 28 of track arrangement 20. Due to the proximity of gear box 152 to outboard track arrangement 20, cable 154 is relatively short and only extends the distance which gear box 152 is spaced apart from outboard track arrangement 20. Like cable 154, the ends of cable 156 have square plugs that engage corresponding square openings in a portion of motion transfer apparatus 28 (e.g., in worm gear 138) of track arrangement 20 and in gear box 152.

According to various alternative and exemplary embodiments, cables 154 and 156 may take one of a variety of different configurations. Moreover, the cables may be constructed from solid rods, hollow tubes, wire, coiled wire, or one or more of a variety of other materials, and may be rigid, flexible, or semi-flexible. According to another alternative and exemplary embodiment, the two shafts 154 and 156 may be replaced by a single shaft or cable that extends through, and engages, the gear box. According to other various alternative and exemplary embodiments, the ends of the cables may take one of a variety of different configurations in order to couple to the gear box and to the motion transfer apparatuses of the track arrangements in a manner that substantially prevents the cables from rotating relative to the portions of the gear box and the motion transfer apparatuses to which the cables are coupled.

According to one exemplary embodiment, the activation of power source 150 (e.g., motor 158) causes upper track 24 to move or translate relative to lower track 22, which in turn causes seat 11, which is coupled to upper track 24, to move forward or rearward within the vehicle. More specifically, the activation of motor 158 causes output shaft 160 to rotate. Gear box 152, which is coupled to output shaft 160, transmits the rotational movement of output shaft 160 to cables 154 and 156, which are oriented generally perpendicular to output shaft 160. Depending on the gearing system utilized in gear box 152, the rotational speed of shafts 154 and 156 may be reduced or increased relative to the rotational speed of output shaft 160, or it may be the same. Cables 154 and 156 are coupled to motion transfer apparatuses 28 of inboard track arrangement 18 and outboard track arrangement 20, respectively, and cause worms 138 to rotate at the same speed as cables 154 and 156. In each of track arrangements 18 and 20, the rotation of worm 138 causes helical gear 137 to rotate around power screw 136. As helical gear 137 rotates around power screw 136, the engagement of the threads or teeth of helical gear 137 with the threads of power screw 136 causes helical gear 137 to translate along the length of power screw 136. Because helical gear 137 (and worm 138) is coupled to upper track 24 and power screw 136 is coupled to lower track 22, the translational movement of helical gear 137 relative to power screw 136 results in the translational movement of upper track 24 relative to lower track 22.

Power transmission system 21 allows power source 150 to be located generally parallel to and adjacent either track arrangement 18 or track arrangement 20. This arrangement or configuration allows power source 150 to be located generally below portions of seat cushion portion 14 that do not significantly deflect (relative to other portions of seat cushion portion 14) under the weight of a person sitting on seat cushion 14 (e.g., such as near one of the edges of seat cushion portion 14). Consequently, seat cushion portion 14 is less likely to contact power source 150 when seat cushion portion 14 is occupied and when the occupant bounces up and down during the operation of the vehicle. In the absence of such contact, a person sitting in seat 11 will not be able to feel power source 150 through seat 11. Moreover, damage to power source 150, to other parts of power transmission system 21, or to seat 11, that may result from such contact is less likely. With respect to vehicles having multiple rows of seats, power transmission system 21 also allows power source 150 to be located in a position (e.g., off to one side of the seat and closer to the front of the seat) where it is less likely to be contacted by the feet of a person that may be sitting in a more rearward seat. This helps to reduce the likelihood that a person behind the seat may damage power source 150 with her feet and may provide that person with more room under the seat in which she may place her feet.

Power transmission system 21 also allows seat assembly 10 to be modified to suit a particular application. By modifying the configuration or arrangement of gear box 152, the torque and speeds of cables 154 and 156 relative to output shaft 160 may be altered. For example, gear box 152 may be configured so that cables 154 and 156 rotate at speeds greater than, equal to, or less than the speed at which output shaft 160 rotates and have torques great than, equal to, or less than the torque of output shaft 160. This ability to adjust the ratio of the speeds and torques of shafts 154 and 156 relative to the speed and torque of output shaft 160 allows seat assembly 10 to be more easily adapted to confonn to the requirements of any particular situation. For example, by modifying the configuration or arrangement of gear box 152, the same power source can be used for different applications, or different power sources can be used for the same application. Similarly, by modifying the configuration or arrangement of gear box 152, the same motion transfer apparatuses 28 may be used for different applications, or different motion transfer apparatuses 28 may be used for the same application.

The portion of sidewall 76 of upper track 24 that extends above the top of inner channel 32 allows power transmission system 21 to be coupled to the side of track arrangements 18 and 20, rather than to the top or bottom. This facilitates the coupling of track arrangements 18 and 20 to seat 11 when there are space constraints above and/or below track arrangements 18 and 20 and reduces the likelihood that seat cushion portion 14 of seat 11 may contact a portion of power transmission system 21 (in particular, power source 150) when seat 11 is occupied. This arrangement may also reduce the extent to which the seat cushion brackets (which couple seat 11 to track arrangements 18 and 20) have to be packaged around portions of power transmission system 21, which may allow the seat cushion brackets to be less complicated and less difficult to manufacture.

According to various alternative and exemplary embodiments, a track system includes two track arrangements. Each track arrangement includes a lower track that is configured to be coupled to the vehicle and an upper track that couples to the lower track in a manner that allows the upper track (and a seat that is coupled to the upper track) to move relative to the lower track.

A motion transfer apparatus or drive assembly is coupled relative to the upper track and the lower track and substantially controls the movement of the upper track relative to the lower track. A power transmission system is coupled to the motion transfer apparatus of each track arrangement and provides the power and movement that actuates the motion transfer apparatus. The power transmission systems generally includes a power source, a gear box, and cables. The power source generally supplies the power and rotational movement that drives the motion transfer apparatus. The gear box is coupled to the power source and transfers the power and movement provided by the power source to the cables. Depending on the configuration of the gear box, the torque and/or rotational movement that is transferred to the cables may be greater or less than the torque and/or rotational movement the power source provides to the gear box. The cables couple the gear box to the motion transfer apparatus of each track arrangement and generally transfer the power and movement provided by the gear box to the motion transfer apparatuses. The power transmission system is configured so that its components can be arranged in positions and orientations that reduce the likelihood that they will interfere with an occupant's use of the vehicle seat or that they will be damaged when the vehicle seat is occupied. For example, the power source may be located generally parallel to, and adjacent, one of the track arrangements. The power transmission system is also configured so that the speed of the input provided by the power transmission system to the motion transfer apparatus may be selected or adjusted to suit different applications.

The size, shape, configuration, and other characteristics of the different components of the track system may be varied to give the track system any one or more of a variety of different characteristics suitable for a particular application. The features of the track system described above are intended to reduce the likelihood that a portion of the seat will make contact with a portion of the track system when the seat is occupied. These features also allow the track system to be adapted to suit the characteristics of a particular application. In addition, these features allow the track system to be used in situations where the vertical space within which to locate a seat assembly is limited.

It is important to note that the term "seat" is intended to be a broad term and not a term of limitation. According to various alternative and exemplary embodiments, the track system may be used with any of a variety of seats, assemblies, or arrangements and is not intended to be limited to use with automobile seating, but may be used with any seating where the seat is intended to be adjusted (e.g., selectively arranged between a forward and rear position). For example, the seat may be vehicle seating or any of a variety of seat arrangements used in airplanes, trains, buses, homes, offices, theaters, or anywhere a seated person may wish to adjust his or her seated position. According to other various alternative and exemplary embodiments, the track system may be used with structures other than seats and may be coupled to the floor of a building, dwelling, or other type of structure, or one of a variety of other types of object or structures. According to still other various alternative and exemplary embodiments, the power transmission system may be used with one of a variety of different track arrangements.

It is also important to note that the construction and arrangement of the elements of the track system as shown in the exemplary and alternative embodiments are illustrative only. Although only a few embodiments of the present inventions have been described in detail in this disclosure, those skilled in the art who review this disclosure will readily appreciate that many modifications are possible (e.g., variations in sizes, dimensions, structures, shapes and proportions of the various elements, values of parameters, mounting arrangements, materials, colors, orientations, etc.) without materially departing from the novel teachings and advantages of the subject matter recited in the claims. For example, a variety of configurations may be provided for the track arrangements, for the gear box, and for the motion transfer apparatuses.

## Claims

1. A track system (16) for coupling a seat within a vehicle, the track system comprising:
a first track arrangement (20) comprising:
a first lower track (22) configured to be coupled to the vehicle;
a first upper track (24) coupled to the first lower track (22) and configured to be coupled to the seat, the first upper track (24) including a first generally vertical wall; and
a first drive assembly (136, 137) coupled between the first lower track (22) and the first upper track (24) and including a first input;
wherein the first upper track (24) is configured to move in a lengthwise direction relative to the first lower track (22) upon actuation of the first drive assembly;
a second track arrangement (18) comprising:
a second lower track (22) configured to be coupled to the vehicle;
a second upper track (24) coupled to the second lower track and configured to be coupled to the seat, the second upper track (24) including a second generally vertical wall; and
a second drive assembly (136, 137) coupled between the second lower track (22) and the second upper track (24) and including a second input;
wherein the second upper track (24) is configured to move in a lengthwise direction relative to the second lower track (22) upon actuation of the second drive assembly;
a motor (150) configured to provide a source of rotational mechanical energy, the motor including a motor output;
a gear box including a third input coupled to the motor output, the gear box (152) dividing the rotational mechanical energy provided by the motor between a first output and a second output (154);
wherein each of the motor (150) and the gear box (152) are located closer to the first track (20) arrangement than to the second track arrangement;
a first member (156) coupled to the first output of the gear box and the first input of the first drive assembly, and
a second member (152) coupled to the second output of the gear box and the second input of the second drive assembly,
wherein the first upper track (24) moves in a lengthwise direction relative to the first lower track (22) when the motor (150) is operated and wherein the second upper track (24) moves in a lengthwise direction relative to the second lower track (22) when the motor (150) is operated,
**characterized in, that**,
a first aperture is formed in the first generally vertical wall; and the first member (156) extending through the first aperture;
a second aperture is formed in the second generally vertical wall, the second member (152) extending through the second aperture; wherein the first lower track (22) is asymmetrical and the second lower track (22) is asymmetrical.

2. The track system (16) of claim 1, wherein the first member (156) extends through the first aperture at an angle of approximately 90 degrees relative to the first upper track (24).

3. The track system (16) of claim 2, wherein the second member (152) extends through the second aperture at an angle of approximately 90 degrees relative to the second upper track (24).

4. The track systerm (16) of claim 3, wherein the seat comprises a seat cushion (14) and a seat back (12), the seat cushion comprising a central portion defining a portion of the seat cushion that experiences the greatest downward deflection when the seat is occupied by an occupant, and wherein the motor is coupled to one of the first track arrangement (20) and the second track arrangement (18) such that the motor is located outside of the central portion of the seat cushion.

5. The track system (16) of claim 1, wherein the motor output comprises an axis or rotation substantially parallel to the first track arrangement (20).

## Patentansprüche

1. Schienensystem (16) zum Koppeln eines Sitzes innerhalb eines Fahrzeugs, wobei das Schienensystem Folgendes umfasst:
eine erste Schienenanordnung (20), umfassend:
eine erste untere Schiene (22), die zum Koppeln mit dem Fahrzeug konfiguriert ist;
eine erste obere Schiene (24), die mit der ersten unteren Schiene (22) gekoppelt ist und zum Koppeln mit dem Sitz konfiguriert ist, wobei die erste obere Schiene (24) eine erste, im Allgemeinen vertikale Wand aufweist; und
eine erste Antriebsanordnung (136, 137) zwischen der ersten unteren Schiene (22) und der ersten oberen Schiene (24), die eine erste Eingabe aufweist;
wobei die erste obere Schiene (24) zum Bewegen in Längsrichtung in Bezug auf die erste untere Schiene (22) nach Aktivierung der ersten Antriebsanordnung konfiguriert ist;
eine zweite Schienenanordnung (18), umfassend:
eine zweite untere Schiene (22), die zum Koppeln mit dem Fahrzeug konfiguriert ist;
eine zweite obere Schiene (24), die mit der zweiten unteren Schiene gekoppelt ist und zum Koppeln mit dem Sitz konfiguriert ist, wobei die zweite obere Schiene (24) eine zweite, im Allgemeinen vertikale Wand aufweist; und
eine zweite Antriebsanordnung (136, 137), die zwischen der zweiten unteren Schiene (22) und der zweiten oberen Schiene (24) gekoppelt ist und eine zweite Eingabe aufweist;
wobei die zweite obere Schiene (24) zum Bewegen in Längsrichtung in Bezug auf die zweite untere Schiene (22) nach Aktivierung der zweiten Antriebsanordnung konfiguriert ist;
einen Motor (150), der zum Bereitstellen einer mechanischen Drehenergie bereitgestellt ist, wobei der Motor eine Motorausgabe aufweist;
einen Getriebekasten mit einer dritten Eingabe, die mit der Motorausgabe gekoppelt ist, wobei das Getriebe (152) die mechanische Drehenergie, die von dem Motor bereitgestellt wird, zwischen einer ersten Ausgabe und einer zweiten Ausgabe (154) aufteilt,
wobei sowohl der Motor (150) als auch das Getriebe (152) näher an der ersten Schienenanordnung (20) als an der zweiten Schienenanordnung angeordnet sind;
ein erstes Element (156), das mit der ersten Ausgabe des Getriebes und der ersten Eingabe der ersten Antriebsanordnung gekoppelt ist, wobei sich das erste Element (156) durch die erste Öffnung erstreckt; und
ein zweites Element (152), das mit der zweiten Ausgabe des Getriebes und der zweiten Eingabe der zweiten Antriebsanordnung gekoppelt ist, wobei sich das zweite Element (152) durch die zweite Öffnung erstreckt;
wobei sich die erste obere Schiene (24) in Längsrichtung in Bezug auf die erste untere Schiene (22) bewegt, wenn der Motor (150) betrieben wird, und wobei sich die zweite obere Schiene (24) in einer Längsrichtung in Bezug auf die zweite untere Schiene (22) bewegt, wenn der Motor (150) betrieben wird; **dadurch gekennzeichnet, dass**
eine erste Öffnung in der ersten, im Allgemeinen vertikalen Wand ausgebildet ist; und sich das erste Element (156) durch die erste Öffnung erstreckt;
eine zweite Öffnung in der zweiten, im Allgemeinen vertikalen Wand ausgebildet ist, wobei sich das zweite Element (152) durch die zweite Öffnung erstreckt; wobei die erste untere Schiene (22) und die zweite untere Schiene (22) asymmetrisch sind.

2. Schienensystem (16) nach Anspruch 1, wobei sich das erste Element (156) durch die erste Öffnung in einem Winkel von ungefähr 90 Grad in Bezug auf die erste obere Schiene (24) erstreckt.

3. Schienensystem (16) nach Anspruch 2, wobei sich das zweite Element (152) durch die zweite Öffnung in einem Winkel von ungefähr · 90 Grad in Bezug auf die zweite obere Schiene erstreckt.

4. Schienensystem (16) nach Anspruch 3, wobei der Sitz ein Sitzpolster (14) und eine Sitzrückenlehne (12) umfasst, wobei das Sitzpolster einen zentralen Abschnitt umfasst, der einen Abschnitt des Sitzpolsters definiert, welcher der größten Abwärtsbeugung ausgesetzt wird, wenn der Sitz von einem Insassen eingenommen wird, und wobei der Motor entweder mit der ersten Schienenanordnung (20) oder der zweiten Schienenanordnung (18) gekoppelt ist, sodass der Motor außerhalb des zentralen Abschnitts des Sitzpolsters angeordnet ist.

5. Schienensystem (16) nach Anspruch 1, wobei die Motorausgabe eine Achse oder Drehung umfasst, die im Wesentlichen parallel zu der ersten Schienenanordnung (22) verlaufen.

## Revendications

1. Système de glissière (16) pour accoupler un siège à l'intérieur d'un véhicule, le système de glissière comprenant :
un premier agencement de glissière (20), comprenant :
une première glissière inférieure (22) configurée pour être accouplée au véhicule ;
une première glissière supérieure (24) accouplée à la première glissière inférieure (22) et configurée pour être accouplée au siège, la première glissière supérieure (24) comportant une première paroi généralement verticale ; et
un premier ensemble d'entraînement (136, 137) accouplé entre la première glissière inférieure (22) et la première glissière supérieure (24) et comportant une première entrée ;
la première glissière supérieure (24) étant configurée pour se déplacer dans une direction longitudinale par rapport à la première glissière inférieure (22) lors de l'actionnement du premier ensemble d'entraînément ;
un deuxième agencement de glissière (18), comprenant :
une deuxième glissière inférieure (22) configurée pour être accouplée au véhicule ;
une deuxième glissière supérieure (24) accouplée à la deuxième glissière inférieure et configurée pour être accouplée siège, la deuxième glissière supérieure (24) comportant une deuxième paroi généralement verticale ; et
un deuxième ensemble d'entraînement (136, 137) accouplé entre la deuxième glissière inférieure (22) et la deuxième glissière supérieure (24) et comportant une deuxième entrée ;
la deuxième glissière supérieure (24) étant configurée pour se déplacer dans une direction longitudinale par rapport à la deuxième glissière inférieure (22) lors de l'actionnement du deuxième ensemble d'entraînement ;
un moteur (150) configuré pour fournir une source d'énergie mécanique de rotation, le moteur comportant une sortie de moteur ;
une boîte de vitesses comportant une troisième entrée accouplée à la sortie du moteur, la boîte de vitesses (152) divisant l'énergie mécanique de rotation fournie par le moteur entre une première sortie et une deuxième sortie (154) ;
chacun du moteur (150) et de la boîte de vitesses (152) étant situé plus près du premier agencement de glissière (20) que du deuxième agencement de glissière ;
un premier organe (156) accouplé à la première sortie de la boîte de vitesses et à la première entrée du premier ensemble d'entraînement, et
un deuxième organe (152) accouplé à la deuxième sortie de la boîte de vitesses et à la deuxième entrée du deuxième ensemble d'entraînement,
la première glissière supérieure (24) se déplaçant dans une direction longitudinale par rapport à la première glissière inférieure (22) lorsque le moteur (150) est actionné et la deuxième glissière supérieure (24) se déplaçant dans une direction longitudinale par rapport à la deuxième glissière inférieure (22) lorsque le moteur (150) est actionné,
**caractérisé en ce que**
une première ouverture est formée dans la première paroi généralement verticale ; le premier organe (156) s'étendant à travers la première ouverture ;
une deuxième ouverture est formée dans la deuxième paroi généralement verticale, le deuxième organe (152) s'étendant à travers la deuxième ouverture ;
la première glissière inférieure (22) étant asymétrique et la deuxième glissière inférieure (22) étant asymétrique.

2. Système de glissière (16) selon la revendication 1, dans lequel le premier organe (156) s'étend à travers la première ouverture suivant un angle d'environ 90° par rapport à la première glissière supérieure (24).

3. Système de glissière (16) selon la revendication 2, dans lequel le deuxième organe (152) s'étend à travers la deuxième ouverture suivant un angle d'environ 90° par rapport à la deuxième glissière supérieure (24).

4. Système de glissière (16) selon la revendication 3, dans lequel le siège comprend un coussin de siège (14) et un dossier de siège (12), le coussin de siège comprenant une portion centrale définissant une portion du coussin de siège qui subit la plus grande déformation vers le bas lorsque le siège est occupé par un occupant, et le moteur étant accouplé à l'un du premier agencement de glissière (20) et du deuxième agencement de glissière (18) de telle sorte que le moteur soit situé à l'extérieur de la portion centrale du coussin de siège.

5. Système de glissière (16) selon la revendication 1, dans lequel la sortie du moteur comprend un axe de rotation sensiblement parallèle au premier agencement de glissière (20).
